(19) Europäisches Patentamt / European Patent Office / Office européen des brevets

(11) **EP 3 909 268 B1**

(12) **EUROPEAN PATENT SPECIFICATION**

(45) Date of publication and mention
of the grant of the patent:
**06.03.2024   Bulletin 2024/10**

(21) Application number: **19909410.3**

(22) Date of filing: **11.01.2019**

(51) International Patent Classification (IPC):
**H04W 4/06** (2009.01)      **H04W 76/40** (2018.01)
**H04W 12/00** (2021.01)      **H04W 16/14** (2009.01)
**H04W 72/00** (2023.01)

(52) Cooperative Patent Classification (CPC):
**H04W 4/06; H04W 12/00; H04W 76/40;**
H04W 16/14; H04W 72/30

(86) International application number:
**PCT/CN2019/071342**

(87) International publication number:
**WO 2020/143023 (16.07.2020 Gazette 2020/29)**

(54) **SCHEDULING AND PRIORITY HANDLING FOR DATA TRANSMISSION**

PLANUNG UND PRIORITÄTSHANDHABUNG FÜR DATENÜBERTRAGUNG

GESTION DE PLANIFICATION ET DE PRIORITÉ POUR TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.11.2021   Bulletin 2021/46**

(73) Proprietor: **TELEFONAKTIEBOLAGET LM
ERICSSON (PUBL)
164 83 Stockholm (SE)**

(72) Inventors:
• **LOHMAR, Thorsten
52072 Aachen (DE)**
• **AAKESSON, Joakim
438 32 Landvetter (SE)**
• **LING, Jie
Shanghai, 200335 (CN)**

(74) Representative: **Ericsson
Patent Development
Torshamnsgatan 21-23
164 80 Stockholm (SE)**

(56) References cited:
EP-A1- 3 079 383          WO-A1-2017/133467
CN-A- 101 094 443        US-A1- 2004 073 928
US-A1- 2013 136 036      US-A1- 2015 109 987

• **SAMSUNG: "5G MBMS Procedure", 3GPP
DRAFT; S2-1810311 5G MBMS PROCEDURE,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , vol. SA
WG2, no. Dongguan, China; 20181015 - 20181019
8 October 2018 (2018-10-08), XP051539297,
Retrieved from the Internet:
URL:http://www.3gpp.org/ftp/tsg%5Fsa/WG2%5
FArch/TSGS2%5F129%5FDongguan/Docs/S2%2
D181 0311%2Ezip [retrieved on 2018-10-08]**
• **Ericsson LM: "Discussion on multi-server MBMS
bearer coordination", 3GPP Draft; S6-170854, 21
July 2017 (2017-07-21), pages 1-5, XP051310833,
Malmo, Sweden**

**Description**

TECHNICAL FIELD

The present disclosure relates to communication systems. More particularly, the present disclosure relates to apparatuses and methods for scheduling and priority handling for data transmission.

BACKGROUND

Mission critical communication services are services that require preferential handling compared to normal telecommunication services, e.g. in support of police or fire brigade. Mission Critical Push-to-Talk (MCPTT) has been developed to send speech bursts, targeting public safety. Now, Mission Critical Data (MCData) is being developed to send non-real time data (for example, messages and files) to first responders. A first responder may be a policeman or a fire brigade person or ambulance personnel.

MBMS are point-to-multipoint interface specifications for wireless technologies such as 3$^{rd}$ Generation Partnership Project Long-Term Evolution ("3GPP LTE"), Wide-band Code Division Multiple Access ("WCDMA"), Universal Mobile Telecommunication System ("WMTS"), Enhanced Voice-Data Optimized ("EVDO")/High Rate Packet Data ("HRPD"), and Digital Video Broadcast ("DVB"). MBMS supports both broadcast and multicast transmission modes. The MBMS broadcast mode is used to deliver Internet Protocol ("IP") packets to terminals in a certain area. This is achieved via MBMS transport bearers which are setup for all cells in which the service should be available and continuously transmit as long as the service is running. Each MBMS transport bearer can be a Point-to-Multipoint ("PtM") bearer that can be simultaneously received by multiple terminals.

The new functionalities which MBMS provides to servers or content providers (or MCPTT ASes or GCS ASes) are grouped in a new functional node called the Broadcast/Multicast Service Center ("BM-SC"). The BM-SC provides a functional interface-xMB interface between servers or content providers (or other API invokers) and the MBMS service offered by a cellular network, and controls the set-up and release of MBMS transport bearers and the scheduling of MBMS transmissions.

EP3079383 A1 discloses how groups con be regrouped when needed. Each group is attached to a MBMS bearer also denoted as MBMS service. An example is provided of police and fire brigade each having their own MBMS service but for a specific incident specific UEs in both groups must be able to listen in also on the other group. A regroup process is disclosed in which UE's can be assigned to both groups or a new combined group is created having its own MBMS service is created in which the UE's belong to this combined group can listen to messages of both police and fire brigade.

WO 2017/133467 A1 discloses a method for implementing an Internet of Vehicles service and a localized network architecture, comprising the distinction of broadcast areas for a V2X message: if the V2X message is broadcasted in a cell under an adjacent base station governed by a local MBMS, the establishment of an MBMS bearer to the adjacent base station is triggered; and when the MBMS bearer for the V2X broadcast areas is established, a downlink user-side data path broadcasted by the cell under the adjacent base station and governed by the local MBMS for the V2X message is: a local V2X server -> a first entity > the adjacent base station. Embodiments satisfy a latency requirement of an Internet of Vehicles service, particularly a V2V/V2I/V2P service.

3GPP S2-1810311 proposes changes to TS 22.186. This solution corresponds Key Issue #14 of FS_eV2XARC / Rel-16 3GPP work item; Support of broadcast over NG-Uu, and also Key Issue#1 Support of eV2X Group Communication. This solution proposes 5G-MBMS architecture and corresponding procedures for V2X services. It is considered to utilize E-UTRAN providing multicast/broadcast as specified in TS 36.440, since NG-RAN is composed of ng-eNB (providing E-UTRA user plane and control plane protocol) and gNB (providing NR user plane and control plane protocol). This solution proposes to adopt existing MBMS architecture principle and procedure in EPS, but only necessary functionality for V2X service is specified for this solution.

MCData aims to re-use MBMS file delivery features. The xMB interface should be extended. The xMB interface allows a MCData server to control the transmission process. The xMB interface (cf 3GPP specification TS 26.348) supports a push mode and a pull mode for MC Data ingestion. In case of the Push Mode, the server acts as MCData Server, which can ingest files without any intermedia node into the BM-SC. In case of the Pull Mode, the BM-SC fetches the MCData file from a content server/content host function. The server or other organizations may store the MC Data file on that content host function. The server is send providing an URL to the BM-SC so that the BM-SC can fetch the correct file. MCData transmission should re-use the MBMS Download delivery functions as defined in TS 26.346 (Clause 7).

MBMS Download Delivery is based on File Delivery over Unidirectional Transport (FLUTE) (RFC 3926). One of the FLUTE features is the so-called File Delivery Table (FDT) Instance Expiration mechanisms, which controls the deletion of association between the Transport Object identification (TOI) with the file metadata. After expiration, the UE (as receiver) and also the BM-SC (as sender) will release all resources, which are allocated to a certain Transport Object and delete all information. In order to save resources on the BM-SC and the UE side, the BM-SC should avoid long FDT expiration times. The UE and the BM-SC should keep resources allocated only during those times, when according data can be actually received.

The FDT Expiration time is absolute timestamp, typically expressed in Network Time Protocol (NTP) format. The BM-SC calculates the expiration as

$$FDT\ expiration = start\_transmit + ((1 + FEC\ Overhead) * filesize/ \quad GBR) + safety \qquad (1)$$

Where

- GBR is the bearer bitrate (in BYTE per second),
- start_transmit is the NTP timestamp of file transmission start time,
- Filesize is the filesize in Byte of the to-be-transmitted file,
- FEC_Overhead is the amount of added redundancy. E.g. 5% FEC overhead,
- Safety is some additional guard safety to secure.

When the FDT Expiration Time (carried in the FLUTE FDT Expiry value) is expressed in a different time format such as Epoch time (i.e. time reference at 1. 1. 1970), then the start transmit timestamp shall also be expressed in the same time format (e.g. Epoch time).

SUMMARY

For Public Safety, likely only small bitrate bearers are used. Alternatively, several public safety organizations should share the same MBMS bearer. Traffics from different organizations are separated on higher layer. Different organizations and different persons in organizations create messages with different priorities. In principle, the organizations are independent from each other, but still share the same transmission resources (i.e. one MBMS bearer pipe with a constant bitrate).

Currently, there is no technical solution available to control the scheduling process of the BM-SC. Currently, the BM-SC is only forwarding messages & files of a single organization (e.g. one server by one organization) onto a bearer and the single organization is fully responsible for the scheduling.

Currently, the BM-SC is controlled using xMB, which is subdivided into control plane and user plane. The control plane is used to establish sessions and services. Any new session needs to be announced to UEs, so that UEs know the access information. Service announcement via MC Services is typically realized using unicast (i.e. a Session initiation protocol (SIP) message carries the service access information via GC1).

Therefore, it is an object of the present disclosure to solve at least the above-mentioned problem.

The present invention is set out in the appended independent claims. Dependent claims constitute embodiments of the invention.

BRIEF DESCRIPTION OF THE DRAWINGS

The invention will be described in detail by reference to the following drawings, in which:

Fig. 1 illustratively shows a communication network where embodiments presented herein are applied;
Fig. 2 illustratively shows a flowchart for using a shared MBMS bearer according to an embodiment of the present disclosure;
Fig. 3 illustratively shows a flowchart for using a shared MBMS bearer according to another embodiment of the present disclosure;
Fig. 4A illustratively shows a first sharing policy for using a shared MBMS bearer according to an embodiment of the present disclosure;
Fig. 4B illustratively shows a state diagram for the first sharing policy for using the shared MBMS bearer according to an embodiment of the present disclosure;
Fig. 5A illustratively shows a second sharing policy for using a shared MBMS bearer according to an embodiment of the present disclosure;
Fig. 5B illustratively shows a state diagram for the second sharing policy for using the shared MBMS bearer according to an embodiment of the present disclosure;
Fig. 6 illustratively shows a method for using a shared MBMS bearer according to another embodiment of the present disclosure;
Fig. 7 illustratively shows a method for using a shared MBMS bearer in a network;
Fig. 8 illustratively shows another method for using a shared MBMS bearer in a network; and
Fig. 9 illustratively shows a functional unit of the server node in accordance with an embodiment of the disclosure.

DETAILED DESCRIPTION

Embodiments of the present disclosure will be described more fully hereinafter with reference to the accompanying drawings, in which embodiments of the disclosure are shown. This invention may, however, be embodied in many different forms and should not be construed as limited to the embodiments set forth herein. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising", "includes" and/or "including" used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Embodiments of the disclosure will be described below with reference to the drawings.

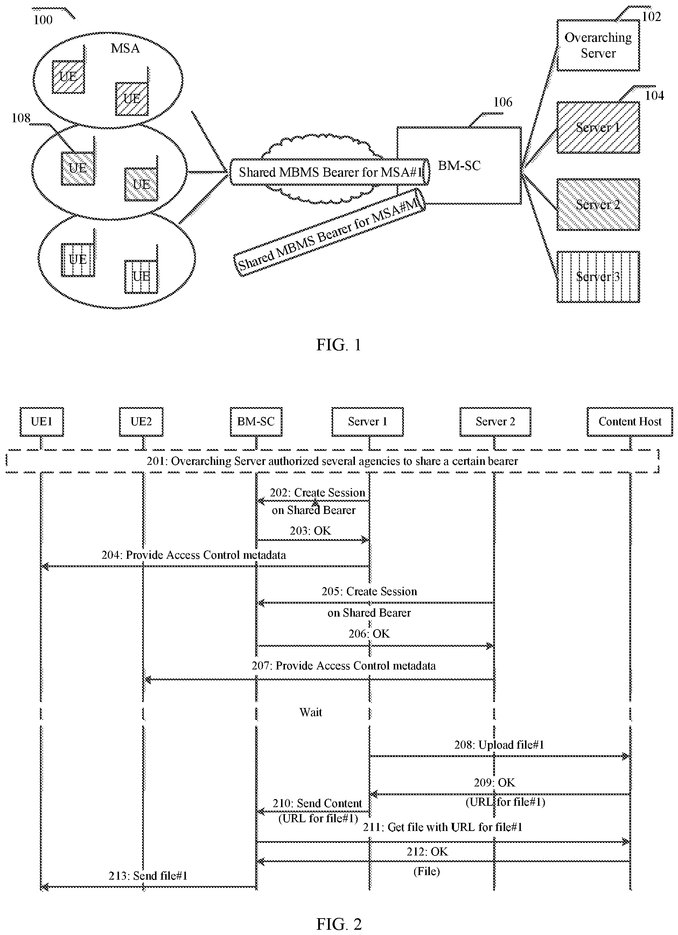

Fig. 1 is a schematic diagram illustrating a communication system 100 where embodiments presented herein are applied. Fig. 1 illustrates the entities of the communication system 100, including overarching server 102 (also named as "master server"), servers 104 (also named as "slave server"), BM-SC 106 and UEs 108. One or more MBMS bearers are shared among several servers 102 on a Time Division principle. A shared MBMS bearer is bound to a certain broadcast coverage area, namely a certain MBMS Service Area (MSA) in Fig. 1. When several servers share an MBMS bearer, the broadcast coverage is identical (the same MSA).

The overarching (master) server 102 is responsible for configuring and controlling the shared MBMS bearers, including the sharing policies and which servers are authorized to access the shared MBMS bearer. There may be multiple shared MBMS bearers in the system being used by a same or a different set of servers.

The servers 104 are also named as agencies, content providers, 3rd party content providers or Application Programming Interface (API) invokers. Only authorized servers 104 are allowed to send messages via the shared MBMS bearer to the UEs 108 (also named as "receivers") which are associated to the authorized servers 104. In Fig. 1, the UEs 108 have a same shade pattern with their associated server 104. The servers 104 are interacting with the BM-SC 106 for accessing MBMS bearers.

The BM-SC 106 is the node which is actually offering the MBMS transmission. In the present disclosure, the BM-SC 106 is aware of the sharing policies configured by overarching server 102, and grants accesses to a shared MBMS bearer to multiple servers. It is to be noted that, traditionally the BM-SC grants accesses to an MBMS bearer only to a single server and shields transactions from other servers. This principle of shielding transactions of other servers is also called multi-tenants support or concern separation within as-a-Service (aaS) to offerings.

The UEs 108 are separated into groups. The group separation is realized using either UDP ports with the same IP Multicast destination address for all groups; or combination of IP Multicast destination addresses and UDP ports.

Reference is now made to FIG.2, which illustratively shows a flowchart for using a shared MBMS bearer according to an embodiment of the present disclosure.

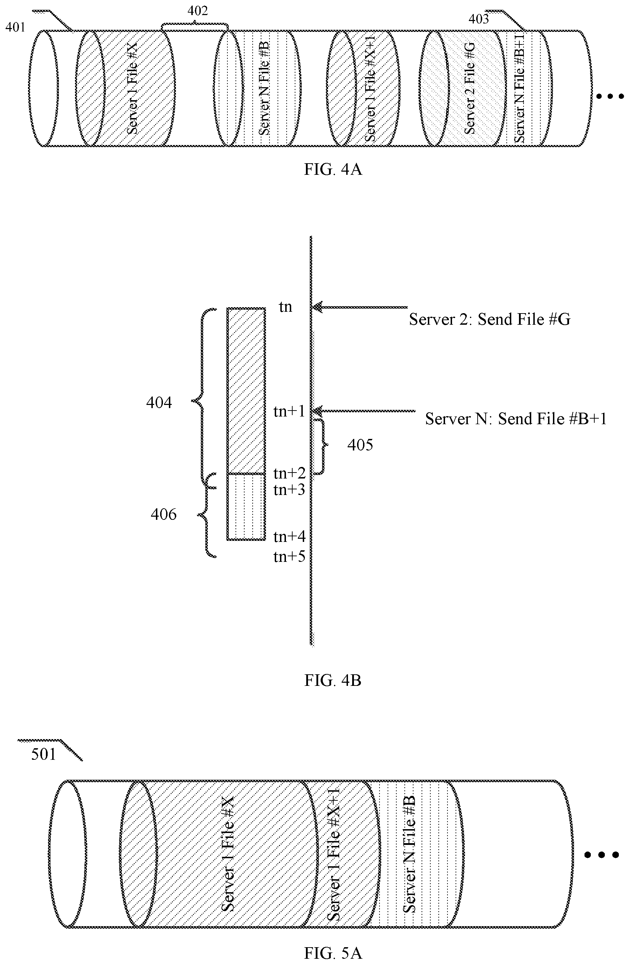

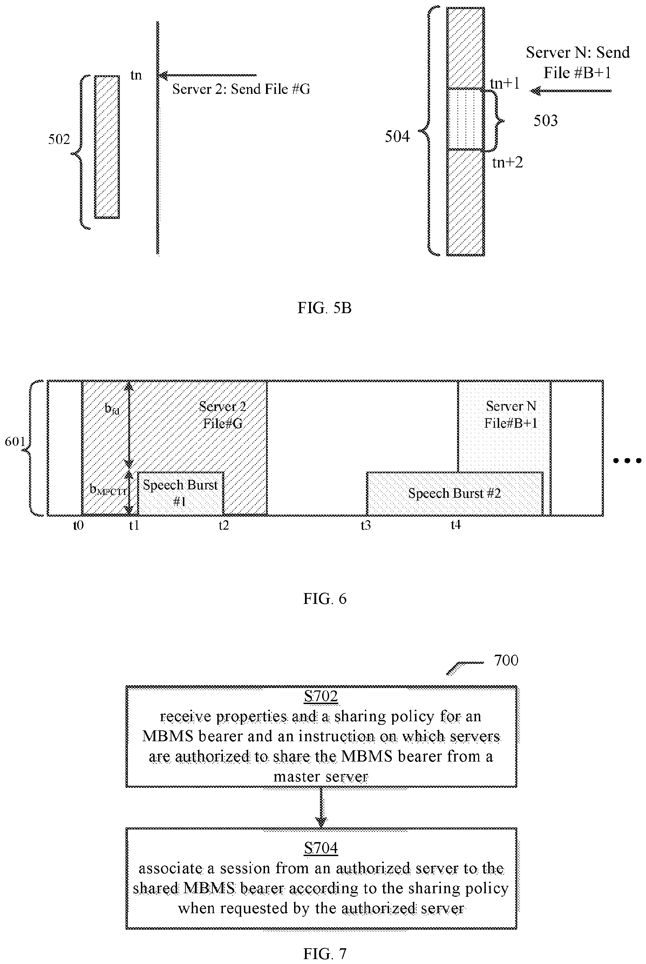

Step 201: the master server (called "overarching agency" here is not depicted in the figure) instructs the BM-SC which servers are authorized to share a certain bearer, and configures a sharing policy. The sharing policy comprising queuing non-real time data transmission policy and interleaving non-real time data transmission policy, which will be further described in Fig.4 and Fig. 5.

Additionally or alternatively, some new xMB procedures may be needed to query the configuration of shared MBMS bearers.

Additionally or alternatively, the shared MBMS bearer (in terms of bitrate/GBR and target MBMS Service Area/List of SAIs) may always be created by the master server, or the shared MBMS bearer may be created by any agency on a need base (i.e. some or all the agencies can take the role of a master agency).

Step 202: server 1 creates a new shared bearer session using xMB Create Session Procedure. Server 1 provides a shared MBMS bearer ID as input, so that the BM-SC creates a new session using an existing MBMS bearer configuration.

Step 203: BM-SC acknowledges the session creation, and provides the access information to server 1.

The server may update the session parameters, which is not depicted in Fig.2.

Step 204: server 1 provides the access metadata to UE 1, which is associated with server 1. Since GC1 interface for unicast is used for service announcement, this step may require some time until all UEs affiliated with server 1 received the access metadata.

Steps 205-207: server 2 creates an xMB session on the same share MBMS bearer as server 1 (same as step 202, 203 and 204). For clarity, the description of the steps will not be repeated herein.

Now, the setup is ready to use, and BM-SC starts waiting for file transmission requests.

Step 208: server 1 desires to send a file to the affiliated UEs. Herein we take pull mode for example, server 1 uploads the file onto a content host, which could be a CDN origin server or a regular HTTP WebServer. WebDav or other upload procedures may be used.

Step 209: Server 1 gets the URLs under which the newly uploaded file is available for download. It should be noted that, when a CDN is used, then in particular the host part and some path parts are CDN provider specific.

Step 210: Server 1 uses xMB procedures to add a new file to the transmission session (i.e. send a transmission request for a file to the BM-SC). In one embodiment, the server adds a new priority indicator to the request. The BM-SC verifies that the requesting server is actually authorized to use the priority. In another embodiment, the BM-SC derives the priority from the server information (e.g. username password or access token in the HTTP request), which is provided with the transmission request. It is to be noted that, there may be some time between the upload (step 208) and the command to the BM-SC (step 210). It is to be noted that, in some implementations, there may be a dedicated preparation procedure to give some time to the BM-SC for transmission preparation.

Step 211: BM-SC requests the file/non-real time data from the content host. In Step 212, the content host provides the file/non-real time data.

In Step 213, the BM-SC partitions the file/non-real time data, and sends the file on the shared MBMS bearer. In an alternative embodiment, the BM-SC also calculates the FEC redundancy. In addition, the BM-SC also determines the transmission duration for the file and sets the FDT expiration (also referred to as FDT Instance Expiry). As stated above, the transmission duration can be calculated in formula (1): FDT expiration = start transmit + ((1 + FEC Overhead) * filesize/GBR) + safety.

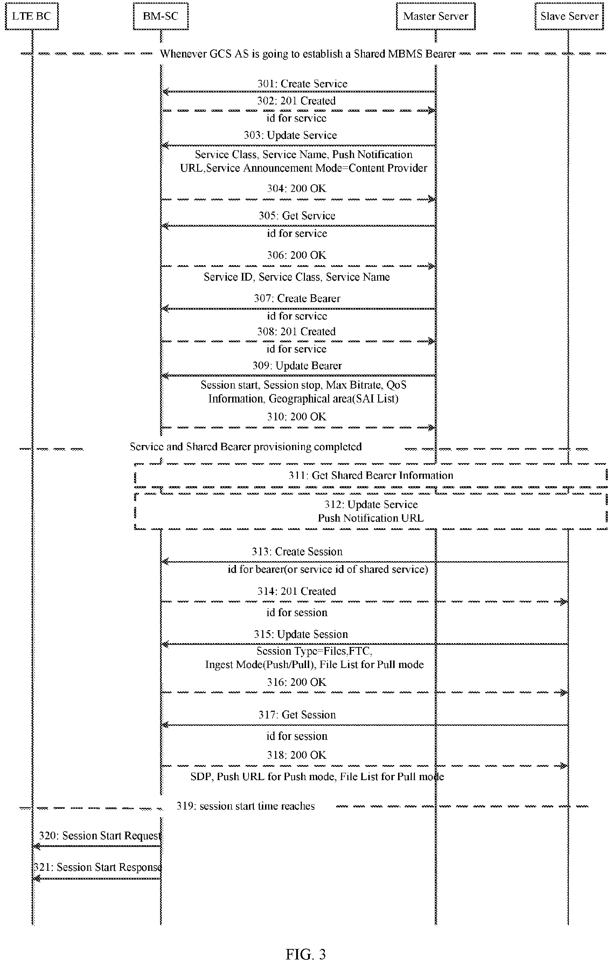

Reference is now made to FIG.3, which illustratively shows a flowchart for using a shared MBMS bearer according to another embodiment of the present disclosure.

Before the master server (called "Master Agency" in the flow diagram) creates a service, the master server authorizes which servers can share a MBMS bearer and configures the sharing policy.

In step 301 the master server creates a service. In step 302, BM-SC acknowledges that the service is created, and feeds back the ID for the service. In Step 303, master server updates the service using parameters which comprising: Service Class, Service Name, Push Notification URL, Service announcement Mode (=server). The BM-SC acknowledges the update of the service in step 304. Then, in step 305, the master server requests to get the service, and the BM-SC updates the service by sending Service ID, Service Class and Service Name back to the master server.

After the creation of the service, in step 307, the master server requests to create a bearer for the service, and sends the ID for the service to the BM-SC. There are two options to create a new Shared MBMS Bearers. Option 1: A new flag or a new enumerate value to an xMB session definition, which turns the xMB service & xMB session into a shared MBMS bearer session. When using a flag, this flag may express a "is shared MBMS bearer". When an enumerate, there may be more than two options, e.g. add the needed session resource information. Option 2: A new "create shared MBMS bearer" procedure, which contains some properties from the xMB session. In particular the MaxBitrate (GBR), MSA (List of SAIs). The Shared MBMS bearer can be associated to the xMB service so that all sessions of that xMB service are associated to the Shared MBMS Bearer. Alternatively, the bearer-id is always provided with the service identifier when creating a new session.

In step 308, the master BM-SC acknowledges the creation of the bearer, and sends the ID for the bearer back to the master server. In step 309, the master server updates the bearer using parameters which comprising: Session Start (meaning the time that the session starts), Session Stop (meaning the time that the session stops), quality of service (QoS) Information, Geographical area (Service Area Ids (SAI) list). The BM-SC acknowledges the update of the bearer in step 310. Now, the service and the shared bearer provisioning is completed.

When the server (slave server) desires to send a file/non-real time data, it gets the shared bearer information in step 311, and updates the service with push Notification URL (allows the server to receive notifications from the BM-SC) in step 312.

In step 313, the slave server creates a session under the above bearer ID (or the API service ID of the shared service). In step 314, BM-SC acknowledges that the bearer has been created. In step 315, the slave server updates the session using the parameters, comprising: Session Type, FEC, Ingest Mode (Push/Pull), and, in case of the Pull mode, the File List. In step 316, the BM-SC acknowledged the update of the session. In step 317, the slave server gets the session, and in step 318, the BM-SC acknowledges the get of the session by sending the parameters SDP, in case of Push Mode also the Push URL for push mode. To be specific, In case of PULL Mode, the BM-SC gets the file list, which describes the files to pull. In case of Push mode, the BM-SC provides the push URL, so that the server can push files.

In step 320, when the start time of the session reaches (step 319), the BM-SC starts to communicate with the LTE broadcast network (LTE BC) by sending session start request. In step 321, BM-SC receives the session start response.

Fig. 4A illustratively shows a first sharing policy for using a shared MBMS bearer according to an embodiment of the present disclosure. The first sharing policy for sharing the MBMS bearer 401 is queuing non-real time data transmission policy. Fig.4A illustrates, according to the queueing non-real time data transmission policy, how the MBMS bearer is shared among files/non-real time data from different servers. The queueing non-real time data transmission policy does not allow pre-emption of ongoing file transmissions. The session may be active, but not continuously used for message/file delivery. During time 402, the shared MBMS bearer is idle. The files/non-real time data from different servers are transmitted on different FLUTE sessions (on different UDP ports), using the same destination IP address (which maps to the same Temporary Mobile Group Identity (TMGI)). The files from server 1 are depicted in the same shade pattern aligned with the Fig. 1. When the shared bearer is busy with the transmission of a first file, the BM-SC starts queueing files (non-real time data)/messages. For example, the File#B+1 from server N was queue until the file#G from Server 2 was completed (403). That is to say, the File#B+1 is sent immediately after the File#G was completed.

Fig.4B illustrates a state diagram for the first sharing policy for using a shared MBMS bearer according to an embodiment of the present disclosure. It is assumed here that the files from server 2 have a higher priority than files from Server #N. Before time tn, the shared MBMS bearer is active, but has no ongoing session with data. At time tn, server 2 sends a request to send file#G via the shared MBMS bearer. Now, the shared MBMS bearer is active, with ongoing session. It is to be noted that, all provisioning and preparation steps are not considered here. It is assumed that the BM-SC has received the file for MCData transmission already. So, the BM-SC allocates the shared MBMS bearer to the session of server 2 and starts sending the file#G. The calculated transmission duration for file#G is referred as 404 in fig.4B. The session parameters (UDP ports, FLUTE parameters, IP parameters) for Server 2 are used. At time tn+1, a request from Server N to send File#B+1 is received by the BM-SC. The Shared MBMS Bearer is still busy with file#G (405 in fig.4B). So, the request for sending File#B+1 is enqueued together with the session information for server N. At time tn+2, the transmission of file#G is finished. The BM-SC has sent all packets (source data and FEC overhead) for file#G. The BM-SC checks the queue for available transmission requests and finds the transmission request for file#B+1 for server N. The BM-SC calculates the new transmission duration for file#B+1 (406 in fig.4B) and starts sending file#B+1 using the session information for server #N (i.e. the session of Server N uses different UDP ports maybe also a different FLUTE parameters than Server N). At time tn+3, the association for file#G has expired, and the BM-SC considers the according identifiers as "free". At time tn+4, the transmission of file#B+1 is finished. Since there are no other files in the queue, the Shared bearer is active without an ongoing session. At time tn+5, the association for file#B+1 is expired and the BM-SC is allowed to re-use the file identifiers for new files again.

Fig. 5A illustratively shows a second sharing policy for using a shared MBMS bearer according to an embodiment of the present disclosure. The second sharing policy for sharing the MBMS bearer 501 is interleaving non-real time data transmission policy. In the interleaving non-real time data transmission policy, a higher priority file may pause the transmission of a file. When this is happening, the BM-SC should send a FLUTE FDT instance with a new Expiration time considering the transmission duration of the file#B+1 of Server N and the remaining data of file#G.

Fig. 5B illustratively shows the state diagram of the second sharing policy for using a shared MBMS bearer according to an embodiment of the present disclosure. At time tn, server 2 sends a file transmission request for file#G. The Shared MBMS bearer is active (i.e. established), but there is no ongoing session. So, the BM-SC determines the transmission duration for file#G (502 in fig. 5B) and sends the FDT Expiration and the file using transmission parameters for server 2 accordingly. At time tn+1, the BM-SC receives the transmission request for file#B+1 from Server N. First, the BM-SC decides to prioritize the transmission for server N (using the policies). Since the file from server N should be prioritized, the BM-SC starts the transmission procedures. First, the BM-SC determines the transmission duration $d_{\#B+1}$ for File#B+1 (i.e. 503 in fig. 5B). Then, the BM-SC determines a new transmission duration $d_{\#G}$ (504 in fig. 5B) for file File#G by summing the transmission duration of file#B+1. Then, the BM-SC sends an updated FDT instance with an updated FDT expiration using the session information for Server 2 on the Shared MBMS bearer. The BM-SC may continue repeating FDT instances for file#G (using the session parameters of server 2), while sending the file#N+1 using the session information of Server #N. The BM-SC starts sending File#B+1 using the session information of server N. At time tn+2, all data for file#B+1 are transmitted and the BM-SC resumes sending the data for file#G.

In an alternative embodiment, the BM-SC may send suspend information on session for server 2, so that all UEs affiliated with server 2 know the minimum suspend duration.

In the second sharing policy of the MBMS bearer, the inter-server prioritization may be provisioned once at setup or when new servers are on boarded. There are at least two prioritization schemes. In prioritization Scheme 1, the master server defines a single priority to each server. As a result, any file from the same server will be treated with the same priority.

In case of prioritization scheme 1, the BM-SC determines the file priority based on the authentication & authorization scheme (which can be realized using username / password or access token).

In case of prioritization scheme 2, would allow to assigns priority level range to each server, so that each server is authorized to use priority levels within the priority level range. For example, the master server provisions the highest priority which the server is authorized to use. For example, there can be priority levels for MCData sessions between 1 and 10, where 10 indicates the highest priority. A first server is authorized to use the priority levels between 1 and 8, while another server is only authorized to use priority levels 1 to 6. So, the first server can send low priority files, so that other servers can still get priority.

In case of prioritization scheme 2, there is a new parameter in the file attributes, indicating the priority for the file. In case of Pull ingest mode, the new priority parameter can be added into the File List (Check Table 5.4-5 "Additional properties for Files" in TS 26.348, Rel 16). The BM-SC uses the authorization & authentication scheme (e.g. username password in the HTTP headers) to verify, that the server is actually authorized to use a certain priority value. In case of push mode, the priority can be added as new HTTP header onto every HTTP PUT requests. Another alternative would be to give all files in a Push session the same priority, e.g. by adding a priority into the common Session Properties (cf Table 5.4-1 "List of Session Properties" of TS 26.348 Rel 16).

Fig. 6 illustratively shows a method for using a shared MBMS bearer according to another embodiment of the present disclosure.

When multiple servers share a bearer for MCData services, the MBMS bearer capacity may be exclusively associated to on server at a time. However, in some cases (e.g. for sharing with speech), the shared MBMS bearer is not exclusively allocated to the transmission of one server. Instead, the transmission *bitrate* is shared.

In one embodiment, the shared MBMS bearer should carry MCPTT (speech) and MCData. MCPTT consist of one or more speech bursts. A speech burst is a short period of time, where MCPTT data is send (speech data). When no one is speaking, then there is no MCPTT data, meaning the burst is over. It should be noted that, the MCPTT data has a constant bitrate. e.g. 40kbps.

Fig. 6 shows that two servers are using the shared MBMS bearer for files, wherein one server is using the shared MBMS bearer for files. The other server is using the shared MBMS bearer for speech data. At time t0, the BM-SC schedules the File#G from Server 2 onto the MBMS bearer of a fixed bitrate (GBR). At time t1, speech data of an MCPTT bursts starts arriving (bitrate $b_{MCPTT}$) and the BM-SC schedules the MCPTT data immediately onto the BM-SC. The bitrate of the file delivery session is reduced by the bitrate of the MCPTT session to $b_{FD} = GBR - b_{MCPTT}$. The expiry of the FDT instance needs to be extended, when the bitrate of the file delivery session is changed.

In an alternative embodiment, a new notification can be sent, so that the UE is notified for a file transmission pause. When it is clear that the shared MBMS bearer is allocated to a different server for a known duration, the UE can stop listening to the shared MBMS bearer and save battery.

At time t3, speech data of speech burst #2 starts arriving. At time t4, file#B+1 starts arriving. And the bitrate assigned to file #B+1 is $b_{FD} = GBR - b_{MCPTT}$. When speech burst#2 ends, the bitrate being assigned to file#B+1 is back to GBR.

When reducing the bitrate, there are consequences to consider. In an alternative embodiment, the file data is repaired after being received by UE. Via the transmission duration, the UE may determine the start of (unicast)_file repair procedure.

Fig. 7 illustrates a method 700 for using MBMS bearers in a network, performed by BM-SC. In 702, the BM-SC receives properties and a sharing policy for an MBMS bearer and an instruction on which servers are authorized to share the MBMS bearer from a master server. In 704, the BM-SC associates a session from an authorized server to the shared MBMS bearer according to the sharing policy when requested by the authorized server. The properties of the MBMS bearer comprise at least a list of MBMS service area, MSAs and Maxbitrate (GBR). It is to be noted that, the MBMS service Areas (MSA) is expressed as List of Service Area Ids (SAI).

In a preferred embodiment, the BM-SC may verify the request of the authorized server to access the shared MBMS bearer. It should be verified that: whether a content provider is authorized to access the shared MBMS bearer. It should be noted that, there may be multiple shared MBMS bearers in the system (used by the same or a different set of content providers). It also be verified that whether the request of the content provider according to the sharing policy.

In a preferred embodiment, at the beginning of the session, the BM-SC may announcing a transmission duration to at least one affiliated UE of an authorized server. The transmission duration is mapped to the FDT Expiry mechanism of MBMS.

In a preferred embodiment, the sharing policy is queuing non-real time data transmission policy. The queuing non-real time data transmission policy does not allow pre-emptioning a non-real time data transmission of an ongoing session.

In another preferred embodiment, the sharing policy is interleaving non-real time data transmission policy. The interleaving non-real time data transmission policy allows suspending a non-real time data transmission of an ongoing session for a non-real time data transmission of a higher priority,

In a preferred embodiment, the interleaving non-real time transmission policy also allows reduing the bitrate of the ongoing non-real time data transmission when one or more other data transmission bursts comes in, in order to send the non-real time data and the one or more other data transmission burts simultaneously. Since the file may be damaged in the case of lower biterate, in a preferred embodiment, the non-real time data is repaired after being received by the UE.

In a preferred embodiment, the interleaving non-real time data transmission is based on the sharing policy of the authorized servers. The sharing policy may be a first sharing policy defined by the master server, in which a single priority is assigned to each server. The BM-SC determines the file priority based on the authentication & authorization scheme. The sharing policy may be a second sharing policy defined by the master server, in which the master server assigns priority level range to each server, so each server is authorized to use priority levels within the priority level range. In a preferred embodiment, the server may add a priority indicator to the request to create sessions on the shared bearer, and the BM-SC may verify the requesting server is authorized to use the priority,

In a preferred embodiment, the BM-SC sending a suspend notification to at least one affiliated UE of the authorized server delivering an ongoing transmission, when an ongoing transmission is suspending for a duration. In an embodiment, the suspend notification may comprise a prolonged transmission duration. In another embodiment, the suspend notification may comprise a minimum suspend duration mapped to the FDT Expiry mechanism. In another embodiment, the suspend notification may comprise a notification that notifying the affiliated UE to stop receiving the shared bearer for an indicated time, the indicated time may be the calculated prolonged transmission time.

In a prefered embodiment, the master server can also be a regular server, and requests to send non-real time data as well.

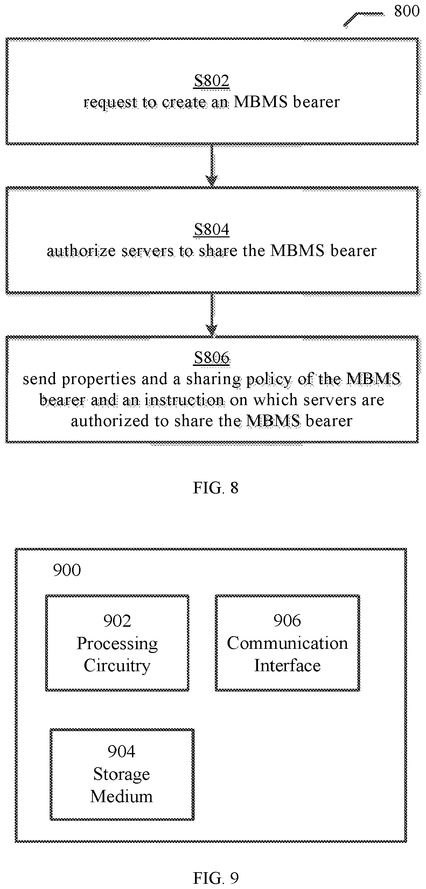

Fig. 8 illustrates a method 800 for using MBMS bearers in a network, performed by a master server. In 802, the master server requests to create an MBMS bearer. In 804, the master server authorizing the slave servers to share the MBMS bearer, and in 806 the master server sending properties and a sharing policy of the MBMS bearer and an instruction on which servers are authorized to share the MBMS bearer to the BM-SC. The properties of the MBMS bearer comprise at least list of MBMS service area, MSAs and Maxbitrate (GBR).

In an embodiment, the master server also sends bearer information to the authorized servers, so the authorized servers are informed of which bearer to use.

In a preferred embodiment, the sharing policy is queuing non-real time data transmission policy. The queuing non-real time data transmission policy does not allow pre-emptioning a non-real time data transmission of an ongoing session.

In another preferred embodiment, the sharing policy is interleaving non-real time data transmission policy. The interleaving non-real time data transmission policy allows suspending a non-real time data transmission of an ongoing session for a non-real time data transmission of a higher priority,

In a preferred embodiment, the interleaving non-real time transmission policy also allows reduing the bitrate of the ongoing non-real time data transmission when one or more other data transmission bursts comes in, in order to send the non-real time data and the one or more other data transmission burts simultaneously. Since the file may be damaged in the case of lower biterate, in a preferred embodiment, the non-real time data is repaired after being received by the UE.

In an embodiment, the master server further configures the sharing policy of the servers.

In a preferred embodiment, the master server may assigning a single priority for each server. In another preferred embodiment, the master server assign a priority level range to each server, so that each server is suthorized to use priorities levels within the priority level range.

The present disclosure is described below with reference to block diagrams and/or flowchart illustrations of methods, apparatus (systems) and/or computer program products according to embodiments of the disclosure. It is understood that blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present disclosure may be embodied in hardware and/or in software (including firmware, resident software, micro-code, etc.). Furthermore, the present disclosure may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

Fig 9 shows a service node for using Multimedia Broadcast Multicast Services ("MBMS") bearers in a network, comprising: a processing circuity 902 and a storage medium 904. It may also comprise a communication interface 906. Processing circuitry is provided using any combination of one or more of a suitable central processing unit (CPU), multiprocessor, microcontroller, digital signal processor (DSP), etc., capable of executing software instructions stored in a computer program product, e.g. in the form of a storage medium. The processing circuity 902 may further be provided as at least one application specific integrated circuit (ASIC) or field programmable gate array (FPGA). The storage medium may store instructions that, when executed by the processing circuity, cause the core network to:receive properties and a sharing policy of an MBMS bearer and an instruction on which servers are authorized to share the MBMS bearer from a master server; and associate a session from an authorized server to the shared MBMS bearer according to the sharing policy when requested by the authorized server

Likewise, a computing device (master server) for using Multimedia Broadcast Multicast Services ("MBMS") bearers in a network can also be implemented by a similar functional unit. It comprising: a processing circuity; and a storage medium storing instructions that, when executed by the processing circuity, cause the computing device to:requesting to create an MBMS bearer; authorizing servers to share the MBMS bearer; and sending properties and a sharing policy of the MBMS bearer and an instruction on which servers are authorized to share the MBMS bearer.

While the present systems and methods have been described in particular detail with reference to specific exemplary embodiments thereof, it should also be appreciated that numerous modifications and alternative embodiments may be devised by those of ordinary skill in the art without departing from the scope of the present disclosure. For example, embodiments wherein devices or systems are disclosed which are to be arranged and/or constructed for performing a specified method or function inherently disclose the method or function as such and/or in combination with other disclosed embodiments of methods or systems. Furthermore, embodiments of methods are considered to inherently disclose their implementation in respective hardware, where possible, in combination with other disclosed embodiments of methods or systems. Furthermore, methods that can be embodied as program instructions, e.g. on a non-transient computer-readable storage medium, are considered to be inherently disclosed as such an embodiment.

The term "UE" used herein may indicate all forms of devices enabled to communicate via a communication network, such as mobile telephones ("cellular" telephones) and laptops with mobile termination, and thus can be, for example, portable, pocket, hand-held devices, such as mobile phones, smart phones, personal digital assistants (PDA); computer-included devices, such as desktops, laptops; vehicles, or other devices, such as meters, household appliances, medical appliances, multimedia devices, etc.

It is intended that the present invention is not be limited to the particular embodiment disclosed as the best mode contemplated for carrying out the present invention, but that the present invention include all embodiments falling within the scope of protection as defined by the appended claims.

## Claims

1. A method for using Multimedia Broadcast Multicast Services, MBMS, bearers in a network, performed by a Broadcast/Multicast Service Center, BM-SC (106), comprising:

   • receiving (S702) properties and a sharing policy for an MBMS bearer and an instruction on which servers are authorized to share the MBMS bearer from a master server (102); and
   • associating (S704) a session from an authorized server (104) to the shared MBMS bearer according to the sharing policy when requested by the authorized server (104),

   wherein the sharing policy is an interleaving non-real time data transmission policy, which allows suspending a non-real time data transmission of an ongoing session for a non-real time data transmission of a higher priority.

2. The method according to claim 1, further comprising:

   • verifying a request of the authorized server (104) to access the shared MBMS bearer.

3. The method according to claim 1, further comprising:

   • announcing a transmission duration mapped to a File Delivery Table, FDT, Expiry mechanism to at least one affiliated User Equipment, UE (108), of an authorized server (104) at the beginning of the session.

4. The method according to claim 1, wherein the interleaving non-real time data transmission policy

   • also allows reducing a bitrate of the ongoing non-real time data transmission when one or more other data transmission bursts come in, in order to send the non-real time data and the one or more other data transmission bursts simultaneously, or

• also allows reducing a bitrate of the ongoing non-real time data transmission when one or more other data transmission bursts come in, in order to send the non-real time data and the one or more other data transmission bursts simultaneously, wherein the non-real time data is repaired after being received by a UE (108).

5. The method according to claim 1, wherein

• the interleaving non-real time data transmission is based on the sharing policy of the authorized servers (104), or
• a priority is a single priority assigned to each server by the master server (102).,

6. The method according to claim 1, wherein

• a priority is a priority level range assigned to each server (104) by the master server (102), and each server (104) is authorized to use priority levels within the priority level range, or
• a priority is a priority level range assigned to each server (104) by the master server (102), and each server (104) is authorized to use priority levels within the priority level range, and the server (104) adds a priority indicator to the request to create sessions on the shared bearer, and the method further comprising: verifying by the BM-SC (106) that the requesting server (104) is authorized to use the priority.

7. The method according to claim 1, further comprising:

• sending by the BM-SC (106) a suspend notification to at least one affiliated UE (108) of the authorized server (104) delivering an ongoing transmission, when the ongoing transmission is suspended for a duration wherein the suspend notification comprises;

- a prolonged transmission duration or a minimum suspend duration mapped to a FDT Expiry mechanism, or
- a notification that notifies the affiliated UE (108) to stop receiving the shared bearer for an indicated time.

8. The method according to claim 1, wherein the properties of the MBMS bearer comprise at least a list of MBMS service area, MSAs and Maxbitrate, GBR.

9. The method according to claim 1, wherein the master server (102) also requests to send data.

10. A method for using Multimedia Broadcast Multicast Services, MBMS, bearers in a network, performed by a master server (102), comprising:

• requesting (S802) to create an MBMS bearer;
• authorizing (S804) servers (104) to share the MBMS bearer; and
• sending (S806) properties and a sharing policy of the MBMS bearer and an instruction on which servers (104) are authorized to share the MBMS bearer to a Broadcast/Multicast Service Center, BM-SC (106),

wherein the sharing policy is an interleaving non-real time data transmission policy, which allows suspending a non-real time data transmission of an ongoing session for a non-real time data transmission of a higher priority.

11. The method according to claim 10, further comprising:

• sending bearer information to the authorized servers (104).

12. The method according to claim 10, wherein the properties of the MBMS bearer comprise at least list of MBMS service area, MSAs and Maxbitrate, GBR.

13. The method according to claim 10, wherein the interleaving non-real time data transmission policy

• also allows reducing the bitrate of the ongoing non-real time data transmission when one or more other data transmission bursts come in, in order to send the non-real time data and the one or more other data transmission bursts simultaneously.

**14.** The method according to claim 13, further comprising:

    • assigning a single priority for each server (104), or
    • assigning priority level range to each server (104), so that each server (104) is authorized to use priority levels within the priority level range.

**15.** A service node (900), for using Multimedia Broadcast Multicast Services, MBMS, bearers in a network, comprising:

    - a processing circuity (902); and
    - a storage medium (904) storing instructions that, when executed by the processing circuity (902, cause the service node (900) to:

        • receive properties and a sharing policy of an MBMS bearer and an instruction on which servers (104) are authorized to share the MBMS bearer from a master server (102); and
        • associate a session from an authorized server (104) to the shared MBMS bearer according to the sharing policy when requested by the authorized server (104),

    wherein the sharing policy is an interleaving non-real time data transmission policy, which allows suspending a non-real time data transmission of an ongoing session for a non-real time data transmission of a higher priority

**16.** A computer program product comprising a computer readable storage medium storing instruction that, when executed by at least one processor of a computing system, cause a computing system to perform the method any of claims 1-14.

**Patentansprüche**

**1.** Verfahren zum Verwenden von Trägern für Multimedia Broadcast Multicast Services, MBMS, in einem Netzwerk, das von einem Broadcast/Multicast Service Center, BM-SC (106), durchgeführt wird, umfassend:

    • Empfangen (S702) von Eigenschaften und einer Freigaberichtlinie für einen MBMS-Träger und einer Anweisung, welche Server zur Freigabe des MBMS-Trägers berechtigt sind, von einem Master-Server (102); und
    • Zuordnen (S704) einer Sitzung von einem autorisierten Server (104) zu dem freigegebenen MBMS-Träger gemäß der Freigaberichtlinie, wenn sie von dem autorisierten Server (104) angefragt wird,

    wobei die Freigaberichtlinie eine verschachtelte Nicht-Echtzeit-Datenübertragungsrichtlinie ist, die es erlaubt, eine Nicht-Echtzeit-Datenübertragung einer laufenden Sitzung für eine Nicht-Echtzeit-Datenübertragung mit einer höheren Priorität auszusetzen.

**2.** Verfahren nach Anspruch 1, ferner umfassend:

    • Verifizieren einer Anfrage des autorisierten Servers (104) zum Zugreifen auf den freigegebenen MBMS-Träger.

**3.** Verfahren nach Anspruch 1, ferner umfassend:

    • Ankündigen einer Übertragungsdauer, die auf einen Ablaufmechanismus einer File Delivery Table, FDT, abgebildet ist, an mindestens eine angeschlossene Benutzervorrichtung, UE (108), eines autorisierten Servers (104) zu Beginn der Sitzung.

**4.** Verfahren nach Anspruch 1, wobei die verschachtelte Nicht-Echtzeit-Datenübertragungsrichtlinie

    • auch Reduzieren einer Bitrate der laufenden Nicht-Echtzeit-Datenübertragung erlaubt, wenn ein oder mehrere andere Datenübertragungsbursts ankommen, um die Nicht-Echtzeit-Daten und den einen oder die mehreren anderen Datenübertragungsbursts gleichzeitig zu senden, oder
    • auch Reduzieren einer Bitrate der laufenden Nicht-Echtzeit-Datenübertragung erlaubt, wenn ein oder mehrere andere Datenübertragungsbursts ankommen, um die Nicht-Echtzeit-Daten und den einen oder die mehreren anderen Datenübertragungsbursts gleichzeitig zu senden, wobei die Nicht-Echtzeit-Daten repariert werden, nachdem sie von einer UE (108) empfangen wurden.

**5.** Verfahren nach Anspruch 1, wobei

- die verschachtelte Nicht-Echtzeit-Datenübertragung auf der Freigaberichtlinie der autorisierten Server (104) basiert, oder
- eine Priorität eine einzige Priorität ist, die jedem Server durch den Master-Server (102) zugewiesen wird.

**6.** Verfahren nach Anspruch 1, wobei

- eine Priorität ein Prioritätsstufenbereich ist, der jedem Server (104) durch den Master-Server (102) zugewiesen wird, und jeder Server (104) autorisiert ist, Prioritätsstufen innerhalb des Prioritätsstufenbereichs zu verwenden, oder
- eine Priorität ein Prioritätsstufenbereich ist, der jedem Server (104) durch den Master-Server (102) zugewiesen wird, und jeder Server (104) autorisiert ist, Prioritätsstufen innerhalb des Prioritätsstufenbereichs zu verwenden, und der Server (104) einen Prioritätsindikator zu der Anfrage hinzufügt, Sitzungen auf dem freigegebenen Träger zu erzeugen, und das Verfahren ferner Folgendes umfasst: Verifizieren durch das BM-SC (106), dass der anfragende Server (104) autorisiert ist, die Priorität zu verwenden.

**7.** Verfahren nach Anspruch 1, ferner umfassend:

- Senden durch das BM-SC (106) einer Unterbrechungsbenachrichtigung an mindestens eine angeschlossene UE (108) des autorisierten Servers (104), die eine laufende Übertragung liefert, wenn die laufende Übertragung für eine Dauer unterbrochen wird, wobei die Unterbrechungsbenachrichtigung Folgendes umfasst:

  - eine verlängerte Übertragungsdauer oder eine minimale Unterbrechungsdauer, die auf einen FDT-Ablaufmechanismus abgebildet ist, oder
  - eine Benachrichtigung, die die angeschlossenen UE (108) benachrichtigt, das Empfangen des freigegebenen Trägers für eine angegebene Zeit zu stoppen.

**8.** Verfahren nach Anspruch 1, wobei die Eigenschaften des MBMS-Trägers mindestens eine Liste von MBMS-Dienstbereichen, MSAs, und Maxbitrate, GBR, umfassen.

**9.** Verfahren nach Anspruch 1, wobei der Master-Server (102) auch Senden von Daten anfragt.

**10.** Verfahren zum Verwenden von Trägern für Multimedia Broadcast Multicast Services, MBMS, in einem Netzwerk, das von einem Master-Server (102) durchgeführt wird, umfassend:

- Anfragen (S802), einen MBMS-Träger zu erzeugen;
- Autorisieren (S804) von Servern (104), den MBMS-Träger freizugeben; und
- Senden (S806) von Eigenschaften und einer Freigaberichtlinie des MBMS-Trägers und einer Anweisung, welche Server (104) zur Freigabe des MBMS-Trägers berechtigt sind, an ein Broadcast/Multicast Service Center, BM-SC (106), wobei die Freigaberichtlinie eine verschachtelte Nicht-Echtzeit-Datenübertragungsrichtlinie ist, die es erlaubt, eine Nicht-Echtzeit-Datenübertragung einer laufenden Sitzung für eine Nicht-Echtzeit-Datenübertragung mit einer höheren Priorität auszusetzen.

**11.** Verfahren nach Anspruch 10, ferner umfassend:

- Senden von Trägerinformationen an die autorisierten Server (104).

**12.** Verfahren nach Anspruch 10, wobei die Eigenschaften des MBMS-Trägers mindestens eine Liste von MBMS-Dienstbereichen, MSAs, und Maxbitrate, GBR, umfassen.

**13.** Verfahren nach Anspruch 10, wobei die verschachtelte Nicht-Echtzeit-Datenübertragungsrichtlinie

- auch Reduzieren der Bitrate der laufenden Nicht-Echtzeit-Datenübertragung erlaubt, wenn ein oder mehrere andere Datenübertragungsbursts ankommen, um die Nicht-Echtzeit-Daten und den einen oder die mehreren anderen Datenübertragungsbursts gleichzeitig zu senden.

**14.** Verfahren nach Anspruch 13, ferner umfassend:

• Zuweisen einer einzigen Priorität für jeden Server (104), oder
• Zuweisen eines Prioritätsstufenbereichs zu jedem Server (104), sodass jeder Server (104) berechtigt ist, Prioritätsstufen innerhalb des Prioritätsstufenbereichs zu verwenden.

**15.** Dienstknoten (900) zum Verwenden von Trägern für Multimedia Broadcast Multicast Services, MBMS, in einem Netzwerk, umfassend:

- eine Verarbeitungsschaltung (902); und
- ein Speichermedium (904) zum Speichern von Anweisungen, die beim Ausführen durch die Verarbeitungsschaltung (902) den Dienstknoten (900) zu Folgendem veranlassen:

• Empfangen von Eigenschaften und einer Freigaberichtlinie eines MBMS-Trägers und einer Anweisung, welche Server (104) zur Freigabe des MBMS-Trägers berechtigt sind, von einem Master-Server (102); und
• Zuordnen einer Sitzung von einem autorisierten Server (104) zu dem freigegebenen MBMS-Träger gemäß der Freigaberichtlinie, wenn sie von dem autorisierten Server (104) angefragt wird,

wobei die Freigaberichtlinie eine verschachtelte Nicht-Echtzeit-Datenübertragungsrichtlinie ist, die es erlaubt, eine Nicht-Echtzeit-Datenübertragung einer laufenden Sitzung für eine Nicht-Echtzeit-Datenübertragung mit einer höheren Priorität auszusetzen.

**16.** Computerprogrammprodukt, umfassend ein computerlesbares Speichermedium zum Speichern von Anweisungen, die beim Ausführen durch mindestens einen Prozessor eines Computersystems ein Computersystem dazu veranlassen, das Verfahren nach einem der Ansprüche 1 bis 14 durchzuführen.

## Revendications

**1.** Procédé d'utilisation de supports de services de diffusion/multidiffusion multimédia, MBMS, dans un réseau, exécuté par un centre de services de diffusion/multidiffusion, BM-SC (106), comprenant :

• la réception (S702) de propriétés et d'une politique de partage pour un support MBMS et d'une instruction sur les serveurs autorisés à partager le support MBMS à partir d'un serveur maître (102) ; et
• l'association (S704) d'une session d'un serveur autorisé (104) au support MBMS partagé conformément à la politique de partage lorsque cela est demandé par le serveur autorisé (104), dans lequel la politique de partage est une politique de transmission de données en temps non réel d'entrelacement, qui permet de suspendre une transmission de données en temps non réel d'une session en cours pour une transmission de données en temps non réel de priorité plus élevée.

**2.** Procédé selon la revendication 1, comprenant en outre :

• la vérification d'une demande du serveur autorisé (104) pour accéder au support MBMS partagé.

**3.** Procédé selon la revendication 1, comprenant en outre :

• l'annonce d'une durée de transmission mappée à un mécanisme d'expiration de table de distribution de fichier, FDT, à au moins un équipement utilisateur, UE, affilié (108), d'un serveur autorisé (104) au début de la session.

**4.** Procédé selon la revendication 1, dans lequel la politique de transmission de données en temps non réel d'entrelacement

• permet également de réduire un débit binaire de la transmission de données en temps non réel en cours lorsqu'une ou plusieurs autres rafales de transmission de données arrivent, afin d'envoyer simultanément les données en temps non réel et les une ou plusieurs autres rafales de transmission de données, ou
• permet également de réduire un débit binaire de la transmission de données en temps non réel en cours lorsqu'une ou plusieurs autres rafales de transmission de données arrivent, afin d'envoyer simultanément les données en temps non réel et les une ou plusieurs autres rafales de transmission de données, dans lequel les données en temps non réel sont réparées après avoir été reçues par un UE (108).

**5.** Procédé selon la revendication 1, dans lequel

- la transmission de données en temps non réel d'entrelacement est basée sur la politique de partage des serveurs autorisés (104), ou
- une priorité est une priorité unique attribuée à chaque serveur par le serveur maître (102).

**6.** Procédé selon la revendication 1, dans lequel

- une priorité est une plage de niveaux de priorité attribuée à chaque serveur (104) par le serveur maître (102), et chaque serveur (104) est autorisé à utiliser des niveaux de priorité dans la plage de niveaux de priorité, ou
- une priorité est une plage de niveaux de priorité attribuée à chaque serveur (104) par le serveur maître (102), et chaque serveur (104) est autorisé à utiliser des niveaux de priorité dans la plage de niveaux de priorité, et le serveur (104) ajoute un indicateur de priorité à la demande de création de sessions sur le support partagé, et le procédé comprenant en outre : la vérification par le BM-SC (106) que le serveur demandeur (104) est autorisé à utiliser la priorité.

**7.** Procédé selon la revendication 1, comprenant en outre :

- l'envoi par le BM-SC (106) d'une notification de suspension à au moins un UE affilié (108) du serveur autorisé (104) délivrant une transmission en cours, lorsque la transmission en cours est suspendue pendant une durée, dans lequel la notification de suspension comprend ;

  - une durée de transmission prolongée ou une durée de suspension minimale mappée à un mécanisme d'expiration FDT, ou
  - une notification qui notifie à l'UE affilié (108) d'arrêter la réception du support partagé pendant une durée indiquée.

**8.** Procédé selon la revendication 1, dans lequel les propriétés du support MBMS comprennent au moins une liste de zones de service MBMS, MSA et un débit binaire maximal, GBR.

**9.** Procédé selon la revendication 1, dans lequel le serveur maître (102) demande également d'envoyer des données.

**10.** Procédé d'utilisation de supports de services de diffusion/multidiffusion multimédia, MBMS, dans un réseau, exécuté par un serveur maître (102), comprenant :

- la demande (S802) de création d'un support MBMS ;
- l'autorisation (S804) des serveurs (104) à partager le support MBMS ; et
- l'envoi (S806) de propriétés et d'une politique de partage du support MBMS et d'une instruction sur les serveurs (104) autorisés à partager le support MBMS à un centre de service de diffusion/multidiffusion, BM-SC (106), dans lequel la politique de partage est une politique de transmission de données en temps non réel d'entrelacement, qui permet de suspendre une transmission de données en temps non réel d'une session en cours pour une transmission de données en temps non réel de priorité plus élevée.

**11.** Procédé selon la revendication 10, comprenant en outre :

- l'envoi d'informations de support aux serveurs autorisés (104).

**12.** Procédé selon la revendication 10, dans lequel les propriétés du support MBMS comprennent au moins une liste de zones de service MBMS, MSA et un débit binaire maximal, GBR.

**13.** Procédé selon la revendication 10, dans lequel la politique de transmission de données en temps non réel d'entrelacement

- permet également de réduire le débit binaire de la transmission de données en temps non réel en cours lorsqu'une ou plusieurs autres rafales de transmission de données arrivent, afin d'envoyer simultanément les données en temps non réel et les une ou plusieurs autres rafales de transmission de données.

**14.** Procédé selon la revendication 13, comprenant en outre :

• l'attribution d'une seule priorité à chaque serveur (104), ou
• l'attribution d'une plage de niveaux de priorité à chaque serveur (104), de sorte que chaque serveur (104) est autorisé à utiliser des niveaux de priorité dans la plage de niveaux de priorité.

15. Noeud de service (900), pour utiliser des supports de services de diffusion/multidiffusion multimédia, MBMS, dans un réseau, comprenant :

- un circuit de traitement (902) ; et
- un support de stockage (904) stockant des instructions qui, lorsqu'elles sont exécutées par le circuit de traitement (902), amènent le noeud de service (900) à :

• recevoir des propriétés et une politique de partage d'un support MBMS et une instruction sur les serveurs (104) autorisés à partager le support MBMS à partir d'un serveur maître (102) ; et
• associer une session d'un serveur autorisé (104) au support MBMS partagé conformément à la politique de partage lorsque cela est demandé par le serveur autorisé (104), dans lequel la politique de partage est une politique de transmission de données en temps non réel d'entrelacement, qui permet de suspendre une transmission de données en temps non réel d'une session en cours pour une transmission de données en temps non réel de priorité plus élevée.

16. Produit de programme informatique comprenant un support de stockage lisible par ordinateur stockant une instruction qui, lorsqu'elle est exécutée par au moins un processeur d'un système informatique, amène un système informatique à exécuter le procédé selon l'une quelconque des revendications 1 à 14.

FIG. 1

FIG. 2

| LTE BC | | BM-SC | | | Master Server | | Slave Server |

Whenever GCS AS is going to establish a Shared MBMS Bearer

301: Create Service

302: 201 Created

id for service

303: Update Service

Service Class, Service Name, Push Notification
URL,Service Announcement Mode=Content Provider

304: 200 OK

305: Get Service

id for service

306: 200 OK

Service ID, Service Class, Service Name

307: Create Bearer

id for service

308: 201 Created

id for service

309: Update Bearer

Session start, Session stop, Max Bitrate, QoS
Information, Geographical area(SAI List)

310: 200 OK

Service and Shared Bearer provisioning completed

311: Get Shared Bearer Information

312: Update Service
Push Notification URL

313: Create Session

id for bearer(or service id of shared service)

314: 201 Created

id for session

315: Update Session

Session Type=Files,FTC,
Ingest Mode(Push/Pull), File List for Pull mode

316: 200 OK

317: Get Session

id for session

318: 200 OK

SDP, Push URL for Push mode, File List for Pull mode

319: session start time reaches

320: Session Start Request

321: Session Start Response

FIG. 3

FIG. 4A

Server 2: Send File #G

Server N: Send File #B+1

FIG. 4B

FIG. 5A

502

tn

Server 2: Send File #G

Server N: Send
File #B+1

tn+1

503

504

tn+2

FIG. 5B

601

$b_{fd}$

$b_{MPCTT}$

Server 2
File#G

Speech Burst
#1

Server N
File#B+1

Speech Burst #2

t0      t1              t2              t3      t4

• • •

FIG. 6

700

S702
receive properties and a sharing policy for an
MBMS bearer and an instruction on which servers
are authorized to share the MBMS bearer from a
master server

S704
associate a session from an authorized server to the
shared MBMS bearer according to the sharing policy
when requested by the authorized server

FIG. 7

800

```
┌────────────────────────────────────────────┐
│                                            │
│               S802                         │
│       request to create an MBMS bearer     │
│                                            │
└────────────────────────────────────────────┘
                      │
                      ▼
┌────────────────────────────────────────────┐
│                                            │
│               S804                         │
│    authorize servers to share the MBMS     │
│                bearer                      │
│                                            │
└────────────────────────────────────────────┘
                      │
                      ▼
┌────────────────────────────────────────────┐
│               S806                         │
│  send properties and a sharing policy of   │
│  the MBMS bearer and an instruction on     │
│  which servers are authorized to share     │
│            the MBMS bearer                 │
└────────────────────────────────────────────┘
```

FIG. 8

```
┌─────────────────────────────────────────────────┐
│  900                                            │
│                                                 │
│   ┌───────────────┐     ┌───────────────┐       │
│   │     902       │     │     906       │       │
│   │  Processing   │     │ Communication │       │
│   │   Circuitry   │     │   Interface   │       │
│   └───────────────┘     └───────────────┘       │
│                                                 │
│   ┌───────────────┐                             │
│   │     904       │                             │
│   │   Storage     │                             │
│   │   Medium      │                             │
│   └───────────────┘                             │
│                                                 │
└─────────────────────────────────────────────────┘
```

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3079383 A1

- WO 2017133467 A1